(19) Europäisches Patentamt
European Patent Office
Office européen des brevets

(11) EP 3 575 018 A1

(12) **EUROPEAN PATENT APPLICATION**

(43) Date of publication:
04.12.2019 Bulletin 2019/49

(51) Int Cl.:
*B22F 3/105* (2006.01)  *B22F 3/15* (2006.01)
*C22C 19/03* (2006.01)  *B22F 3/24* (2006.01)

(21) Application number: 19172095.2

(22) Date of filing: 01.05.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 30.05.2018 GB 201808824

(71) Applicant: Rolls-Royce plc
London SW1E 6AT (GB)

(72) Inventor: Pardhi, Yogiraj
Derby, Derbyshire DE24 8BJ (GB)

(74) Representative: Rolls-Royce plc
Intellectual Property Dept SinA-48
PO Box 31
Derby DE24 8BJ (GB)

(54) **CRACK REDUCTION FOR ADDITIVE LAYER MANUFACTURING**

(57)    The present disclosure relates to methods for reducing cracking in metallic components fabricated via additive layer manufacturing (ALM). Example embodiments include a method for additive layer manufacturing of a metallic component, comprising the steps of: providing a powder bed (11) on a substrate (16); scanning a laser beam (10) across the powder bed (11) to fuse the powder and form a layer of the metallic component; replenishing the powder bed (11) and repeating the step of scanning the laser beam (10) across the powder to form a plurality of successive layers of the metallic component; and heat treating (45) the metallic component to a stress relieving treatment temperature, wherein the metallic component prior to heat treatment has a porosity of between 0.15% and 0.5% and the step of heat treating the metallic component includes heating the metallic component to the stress relieving treatment temperature at a heating rate of greater than 50°C per minute.

FIG. 1

**Description**

The present disclosure relates to methods for reducing cracks in metallic components fabricated via additive layer manufacturing (ALM).

ALM is a technique that allows for articles to be manufactured of arbitrary shape without moulding or machining. Articles made via ALM are formed layer by layer, with each additional layer being fused to previous layers. The technique can be applied to a wide range of materials including polymers, metals and ceramics, each with particular requirements for providing the required feedstock, typically in the form of a particulate material, and power to cause fusion of the layers.

For polymeric materials, ALM may involve the application of layers by various routes, including selective solidification of a liquid precursor, fusing of a layer of powder or application of a layer by extrusion of molten material. The low stiffness and thermoplastic nature of many polymeric materials enables articles to be made in a variety of ways with reasonable tolerances. For other materials such as metals, fabrication options may be more limited, especially if the melting point of the metal is high or if the metal is reactive. Metallic ALM components are typically formed from a powder bed, with a laser beam used to selectively fuse parts of a new layer of material to make a desired subsequent layer of metal. Further layers are then applied by applying a further layer of powder and repeating the process. A component is then gradually built up layer by layer in a bed of powder. Once the component is fully formed, it is removed from the powder bed.

Ceramic components may also be manufactured by ALM but, due to their high melting point, high stiffness and generally low thermal conductivity, it is typically not possible to directly generate an ALM part from a powder precursor. Instead, a powder may be used to generate a fused green component that can then be fired to form the finished component.

A problem with forming components via ALM, particularly for high temperature metallic alloys such as nickel-based superalloys, is in eliminating cracks and pores that are formed as an inevitable result of the manufacturing technique. Such cracks and pores may be reduced by use of a subsequent hot isostatic pressing (HIP) process but are difficult to eliminate entirely.

GB2506494A discloses a method of additive manufacturing of a superalloy component, in which the ALM parameters are optimised by selective scanning of a laser beam across the surface of a powder bed in a line-by-line manner, where the spacing between adjacent scan lines is no more than twice the thickness of the layer being formed. An overlap between scan lines range between 60% and 90%.

According to a first aspect there is provided a method for additive layer manufacturing of a metallic component, comprising the steps of:

providing a powder bed on a substrate;
scanning a laser beam across the powder bed to fuse the powder and form a layer of the metallic component;
replenishing the powder bed and repeating the step of scanning the laser beam across the powder to form a plurality of successive layers of the metallic component; and
heat treating the metallic component to a stress relieving treatment temperature,
wherein the metallic component prior to heat treatment has a porosity of between 0.15% and 0.5% and the step of heat treating the metallic component includes heating the metallic component to the stress relieving treatment temperature at a rate of greater than 50°C per minute.

The metallic component may be a high gamma prime nickel superalloy, for example a $\gamma$'-strengthened superalloy having a $\gamma$' solvus temperature, wherein the step of heat treating the metallic component comprises heating the component to a treatment temperature at or above the $\gamma$' solvus temperature at a rate equal to or greater than 50 °C/min and subsequently cooling the component at a rate of equal to or greater than 60 °C/min. Rapid heating of the component to a treatment temperature at or above the $\gamma$' solvus temperature and subsequent rapid cooling may significantly reduce defects such as cracks, pore, voids and layering defects in an component manufactured by an ALM method without the need for a hot isostatic pressing step.

The step of scanning the laser beam across the powder bed may result in an area energy density input to the powder bed layer of less than 3.0 J/mm$^2$ for a powder bed layer thickness of up to or around 40 microns, less than 2.5 J/mm$^2$ for a powder bed layer thickness of up to or around 30 microns or less than 2.0 J/mm$^2$ for a powder bed layer thickness of up to or around 20 microns. The area energy density required for a thicker powder bed layer may be higher. The area energy density may be defined by a power rating of the laser beam divided by a scan speed of the laser beam and a spacing between successive scans of the laser beam.

The method may comprise a hot isostatic pressing treatment of the metallic component after the step of heat treating. The hot isostatic pressing treatment may involve heating to a temperature of between 1200 and 1300°C.

The stress relieving treatment temperature may be between 1000 and 1350°C.

The skilled person will appreciate that, except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:

Figure 1 is a schematic diagram of a laser beam scanning across a surface of a powder bed;

Figure 2 is a schematic plot of defect fraction of cracks and porosity as a function of area energy density;

Figures 3a and 3b are schematic diagrams illustrating alternative laser scanning patterns for ALM; and

Figure 4 is a schematic flow diagram of an example method of fabricating a component via ALM.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

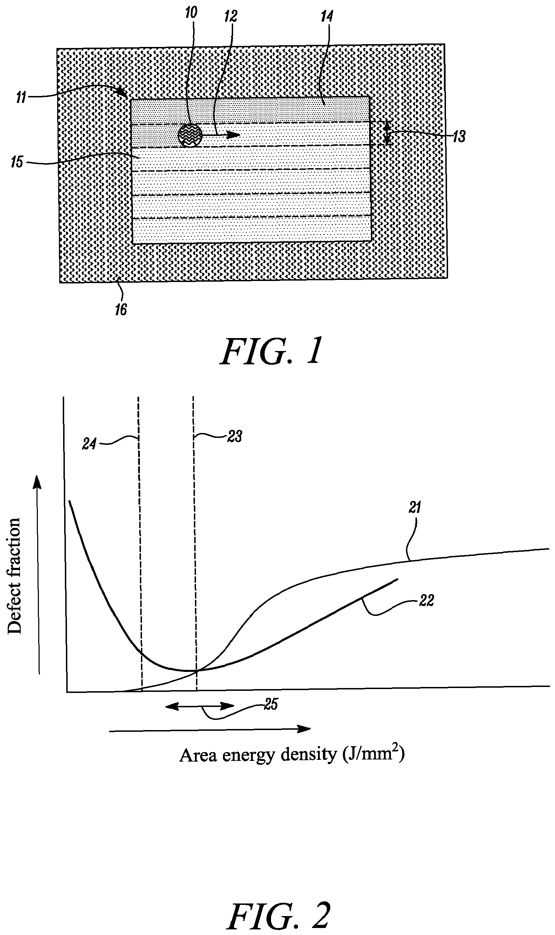

Figure 1 illustrates schematically a process of scanning a laser beam 10 across the surface of a metallic powder bed 11. The laser beam 10 is scanned at a constant speed 12 across the powder bed 11 along adjacent scan lines with a defined spacing 13. Scanning the laser beam 10 across the powder bed results in unconsolidated powder 15 becoming consolidated and densified material 14. The spot size of the laser beam 10 may be similar or different to the line spacing 13. In typical embodiments the spot size may be larger than the line spacing 13 to allow for some overlap between successive scans. A typical line spacing is in the range of 0.03 to 0.08 mm (30 to 80 μm). A typical spot size is in the range of 0.05 to 0.1 mm (50 to 100 μm). A typical scan speed may be of the order of a few metres per second, for example between 1.5 and 4.0 m/s for a typical layer thickness of between around 20 and 80 microns.

An area energy density may be defined by the laser beam power, line spacing and scan speed. The area energy density represents an amount of energy input to the powder bed, with a larger amount resulting in greater melting and consolidation of the powder bed. The area energy density, E, may be defined as:

$$E = \frac{P}{vd}$$

where P is the laser power in W, v is the scan speed and d the line spacing (i.e. a distance between two adjacent scan lines).

For a typical laser beam with a power of around 200W and line spacing of 0.03 mm, a scan speed of 3 m/s results in an area energy density of 2.22 J/mm$^2$.

A higher area energy density will tend to result in greater consolidation of the powder bed, resulting in a higher density material. For some materials, however, increasing the area energy density can result in cracking of the material. For high temperature alloys, and nickel-based superalloys in particular, cracking can be a significant issue. This results in the need for post-fabrication steps to reduce or eliminate microcracking, the most effective and commonly used being hot isostatic pressing (HIP).

Figure 2 illustrates schematically the effects of increasing the area energy density on cracks 21 and porosity/voids 22 in an ALM metallic component. As the area energy density increases, the porosity decreases as the powder consolidates through sintering and melting, reaching a minimum at a roughly optimum area energy density region 25. A typical choice of area energy density 23, which is particularly relevant for high gamma prime nickel alloys, is chosen to be within this region, as it balances a trade-off between porosity and increased crack formation, which results from an increase in melting during consolidation. The area energy density is therefore typically kept within this range, as increasing it further will tend to result in increases cracking, while decreasing will result in an increase in porosity. A typical value of volumetric porosity within this optimum region is around 0.15%, with a maximum pore size of around 100 microns.

A problem with the conventional approach to ALM is that cracks resulting from the fabrication process are difficult to remove using hot isostatic pressing. Also, hot isostatic pressing cannot close cracks that extend to the surface of the component, resulting in the need for additional steps such as a process to melt the surface prior to hot isostatic pressing.

A new parameter optimisation approach may be used instead, which is particularly suitable for materials prone to cracking during ALM. In this approach, a first step is to fabricate the component using parameters that are designed to result in minimal or no cracking (around an area energy density 24 indicated on figure 2), but which produce some voids or porosity. The resulting voids will typically result from a lack of fusion of the powder material. The material in this state tends to have increased residual stress, which leads to cracking during subsequent hot isostatic pressing, and is typically not used for this reason.

In a second step, instead of hot isostatic pressing, the component is subjected to a stress relieving heat treatment at a stress relieving treatment temperature, with heating rates greater than 50°C/min, and which may be as high as 500°C/min. This faster than usual heating rate has been found to reduce the chance of cracking. This heat treatment step will then relieve residual stresses caused by the incomplete fusion of the material and reduce the chance of cracking in any subsequent process. Further details of possible stress-relieving heat treatments for various types of $\gamma'$-strengthened superalloys

are disclosed in co-pending application GB1709540.7, the disclosure of which is hereby incorporated by reference.

In a third optional step, the component may be HIPed to close any pores, if this is deemed necessary. If the level of porosity is acceptable from the previous steps this may not be needed.

Further optional surface finishing or other process steps may be included after the second step or after HIPing.

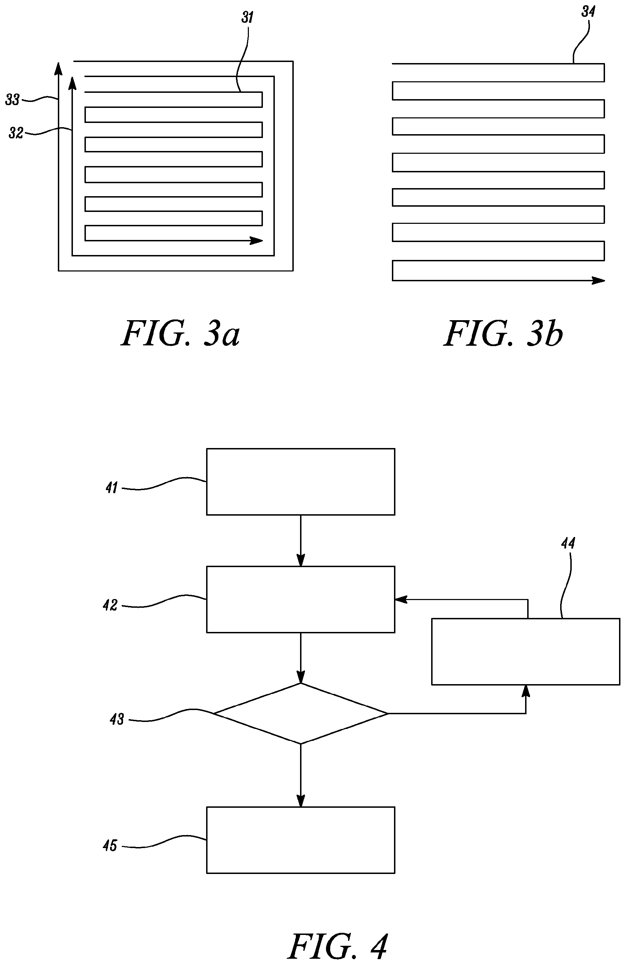

The core of the component may be melted with a different parameter than the skin of the component. For example, an inner portion of each layer of the component may be scanned according to a different pattern to an outer portion. The core of the component may for example be scanned using a hatching pattern 31, while the outer skin of the component is scanned using single or multiple contour lines such as inner and outer contours 32, 33, as shown in Figure 3a (derived from Leonard et al. (2016): CT for Additive Manufacturing Process characterisation: Assessment of melt strategies on defect population, 6th Conference on Industrial Computed Tomography, February 9-12 2016, At Wels, Austria). In some cases, a hatching pattern 34 may be used throughout the component, as shown in Figure 3b. The area energy density may be the same or different for different scan patterns. In the skin or contour region, for example, where it is desired to have a lower porosity than the core, a higher area energy density may be used compared to that for the core.

Post processing steps may be selected or adapted from those described in GB2506494, of from those described in co-pending applications GB1701906.8 and EP18150709.6, the disclosures of which are hereby incorporated by reference.

The modified approach described herein will tend to produce material with no or minimum cracks. In component lifing, cracks are more detrimental to the life of a component than pores and hence material with a uniformly distributed porosity may be deemed more acceptable. This approach takes advantage of the fact that small size (<100μm) uniformly distributed porosity can be produced by ALM methods compared to castings where large porosity is a challenge.

A further advantage of the approach is the ability to use faster scan speeds through using a lower than normal area energy density.

Figure 4 illustrates an example flow diagram of a method of fabricating a metallic component by ALM. In a first step 41, a powder bed is provided on a substrate. In a second step 42, a laser beam is scanned across the powder bed to fuse the powder and form a layer of the metallic component. If a further layer is to be formed (step 43), the powder bed is replenished (step 44) and the scanning process repeated. Once the component is completed, the component is heat treated (step 45) to a stress-relieving temperature. Further finishing steps may then be carried out on the component, such as final machining and/or annealing or other heat treatment or hot isostatic pressing steps.

It will be understood that the invention is not limited to the embodiments above-described and various modifications and improvements can be made without departing from the concepts herein. Except where mutually exclusive, any of the features may be employed separately or in combination with any other features and the disclosure extends to and includes all combinations and sub-combinations of one or more features described herein.

**Claims**

1. A method for additive layer manufacturing of a metallic component, comprising the steps of:

   providing (41) a powder bed (11) on a substrate (16);
   scanning (42) a laser beam (10) across the powder bed (11) to fuse the powder and form a layer of the metallic component;
   replenishing (44) the powder bed (11) and repeating the step of scanning the laser beam (10) across the powder to form a plurality of successive layers of the metallic component; and
   heat treating (45) the metallic component to a stress relieving treatment temperature,
   wherein the metallic component prior to heat treatment has a porosity of between 0.15% and 0.5% and the step of heat treating the metallic component includes heating the metallic component to the stress relieving treatment temperature at a heating rate of greater than 50°C per minute.

2. The method of claim 1 wherein the metallic component is a high gamma prime nickel superalloy.

3. The method of claim 1 or claim 2 wherein the step of scanning the laser beam (10) across the powder bed (11) results in an area energy density input to the powder bed of less than 3.0 J/mm$^2$ for a powder bed layer thickness of up to or around 40 microns, less than 2.5 J/mm$^2$ for a powder bed layer thickness of up to or around 30 microns or less than 2.0 J/mm$^2$ for a powder bed layer thickness of up to or around 20 microns.

4. The method of claim 3 wherein the area energy density is defined by a power rating of the laser beam (10) divided by a scan speed (12) of the laser beam and a spacing (13) between successive scans of the laser beam.

5. The method of any preceding claim comprising a hot isostatic pressing treatment of the metallic component after the step of heat treating.

6. The method of claim 5 wherein the hot isostatic pressing treatment involves heating to a temperature of between 1200 and 1300°C.

7. The method of any preceding claim wherein the stress relieving treatment temperature is between 1000 and 1350°C.

8. The method of any preceding claim wherein the heating rate is between 50°C and 500°C per minute.

9. The method of any one of claims 1 to 6 wherein the metallic component is composed of a $\gamma'$-strengthened superalloy having a $\gamma'$ solvus temperature, wherein the step of heat treating the metallic component comprises heating the component to a treatment temperature at or above the $\gamma'$ solvus temperature at a rate equal to or greater than 50 °C/min and subsequently cooling the component at a rate of equal to or greater than 60 °C/min

*FIG. 1*

*FIG. 2*

*FIG. 3a*

*FIG. 3b*

*FIG. 4*

Europäisches
Patentamt
European
Patent Office
Office européen
des brevets

**EUROPEAN SEARCH REPORT**

Application Number

EP 19 17 2095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 3 415 253 A1 (ROLLS ROYCE PLC [GB]) 19 December 2018 (2018-12-19) * abstract * * paragraphs [0010], [0041], [0045] * * claim 1 * | 1,2,7-9 | INV. B22F3/105 B22F3/15 C22C19/03 ADD. B22F3/24 |
| X | EP 2 944 402 A1 (ALSTOM TECHNOLOGY LTD [CH]) 18 November 2015 (2015-11-18) * paragraphs [0011], [0012], [0021], [0032] - [0034] * * claims 1-6 * | 1,2,7-9 | |
| Y | | 3-6 | |
| Y | L. Rickenbacher ET AL: "High temperature material properties of IN738LC processed by selective laser melting (SLM) technology", Rapid Prototyping Journal, 16 April 2013 (2013-04-16), pages 282-290, XP055109051, Bradford DOI: 10.1108/13552541311323281 Retrieved from the Internet: URL:http://search.proquest.com/docview/1355328844 * abstract * * 3.1 Microstructure * * figure 2 * | 3-6 | |

TECHNICAL FIELDS
SEARCHED (IPC)

B22F
C22C

The present search report has been drawn up for all claims

| Place of search | Date of completion of the search | Examiner |
|---|---|---|
| The Hague | 16 August 2019 | Gomes Pinto F., R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 17 2095

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2019

| Patent document cited in search report | | Publication date | Patent family member(s) | | Publication date |
|---|---|---|---|---|---|
| EP 3415253 | A1 | 19-12-2018 | EP | 3415253 A1 | 19-12-2018 |
| | | | US | 2018361478 A1 | 20-12-2018 |
| EP 2944402 | A1 | 18-11-2015 | CA | 2890977 A1 | 12-11-2015 |
| | | | CN | 105088119 A | 25-11-2015 |
| | | | EP | 2944402 A1 | 18-11-2015 |
| | | | JP | 2015227505 A | 17-12-2015 |
| | | | KR | 20150129616 A | 20-11-2015 |
| | | | RU | 2015116523 A | 20-11-2016 |
| | | | US | 2015322557 A1 | 12-11-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2506494 A
- GB 1709540 A
- GB 1701906 A
- EP 18150709 A

**Non-patent literature cited in the description**

- **LEONARD et al.** CT for Additive Manufacturing Process characterisation: Assessment of melt strategies on defect population. *6th Conference on Industrial Computed Tomography,* 09 February 2016